# EUROPÄISCHE PATENTSCHRIFT

(11) **EP 0 741 842 B1**
(45) Veröffentlichungstag und Bekanntmachung des Hinweises auf die Patenterteilung: **28.04.1999**
(21) Anmeldenummer: 95906302.5
(22) Anmeldetag: 05.01.1995
(51) Int. Cl.: F16B 11/00, F16B 37/04, B29C 45/00

(54) **VERKLEBBARES BEFESTIGUNGSELEMENT ZUM HALTEN VON BAU- ODER FUNKTIONSTEILEN AUF TRÄGERTEILEN**
BONDABLE FASTENER FOR HOLDING STRUCTURAL OR FUNCTIONAL PARTS ON SUPPORT ELEMENTS
ELEMENT DE FIXATION COLLABLE POUR MAINTENIR DES ELEMENTS STRUCTURAUX OU FONCTIONNELS SUR DES SUPPORTS

(30) Priorität: 28.01.1994 DE 4402550
(43) Veröffentlichungstag der Anmeldung: 13.11.1996
(73) Patentinhaber: A. Raymond & Cie, F-38028 Grenoble-Cédex (FR)
(72) Erfinder: LESSER, Hans-Jürgen, D-79618 Rheinfelden (DE)
(74) Vertreter: Kirchgaesser, Johannes, Dipl.-Ing.
(86) Internationale Anmeldenummer: EP9500034
(87) Internationale Veröffentlichungsnummer: WO9520726

(56) Entgegenhaltungen:
- FR-A- 1 164 793
- FR-A- 1 233 838
- FR-A- 2 087 865
- US-A- 3 399 435
- US-A- 3 798 403
- US-A- 4 250 596
- US-A- 4 853 075

## Beschreibung

Die Erfindung betrifft ein verklebbares Befestigungselement zum Halten von Bau-oder Funktionsteilen auf Trägerteilen gemäß dem Oberbegriff des Anspruches 1 und bezieht sich insbesondere auf solche Befestigungselemente, ,die im Kraftfahrzeugbau zur Befestigung von Schutz- bzw. Zierleisten, Leitungen, Muttern oder sonstigen Anbauelementen vorgesehen sind. Durch das Aufkleben der Befestigungselemente auf das Karosserieblech sollen hierbei die Nachteile vermieden werden, die bei der herkömmlichen Befestigung in gestanzten Befestigungslöchern oder mittels Aufschweißen von Befestigungsbolzen oder Muttern auf dem Karosserieblech durch örtliche Verspannungen im Blech entstehen.

Aus der US-A-4 250 596 ist ein derartiges verklebbares Befestigungselement bekannt, bei welchem die Klebefläche ebenfalls mit einem härtbaren, reaktiven Schmelzklebstoff ausgerüstet ist, welcher mittels Wärmezufuhr zur Herstellung einer dauerhaften Klebeverbindung reaktivierbar ist. Der bekannte wärmehärtbare Klebstoff hat die Eigenschaft, daß er bei der Temperatur erweicht, bei der der Endüberzug der auf das Auto aufgebrachten Farbe gebacken wird, und daß er sich verfestigt, wenn der aufgebrachte Farbüberzug auskühlt. Das bedeutet aber, daß die Befestigungselemente beim Anklebevorgang solange am Automobilkörper gehalten werden müssen, bis der abgekühlte Klebstoff einen starken Klebeverbund erzeugt hat. Da das Aushärten des Klebstoffs nach einer Backtemperatur von 180 °C üblicherweise etwa 30 Minuten dauert, müssen die Haltemittel während dieser Zeit voll im Einsatz bleiben.

Aufgabe der Erfindung ist es, die Befestigungselemente mit solchen reaktiven Klebstoffschichten zu versehen, welche nach der Reaktivierung durch Energiezufuhr in kürzester Zeit eine hinreichende Klebeverbindung erzeugen, so daß für die weitere Aushärtung auf den Einsatz der beim Stand der Technik erforderlichen Haltemittel verzichtet werden kann.

Zur Lösung der Aufgabe wird nach der Erfindung vorgeschlagen, das Befestigungselement mit einem Schmelzklebstoff auszurüsten, welcher bei Temperaturen bis 80 °C noch trocken ausgebildet ist und auf der Grundlage von spezifischen Rückgratbindemitteln aufgebaut ist die nach Polymerisations-Polyadditions- oder Polykondensations-Reaktionsmechanismen abbinden und erhärten.

Zweckmäßige Weiterbildungen der Erfindung sind in den abhängigen Ausprüchen beschrieben.

Das mit einer solchen Klebstoffschicht ausgerüstete Befestigungselement bietet den großen Vorteil, daß die Klebstoffschicht bis zum Einsatz der Befestigungselemente absolut klebefrei bzw. kleberesistent ist. Erst durch die Reaktivierung des Schmelzklebstoffs am Einsatzort werden die Adhäsionskräfte des Klebstoffs freigesetzt, die in kürzester Zeit nach entsprechender Aushärtung zu einer haltbaren Verbindung führen, so daß bis zum Erreichen der Endfestigkeit keine Halteelemente benötigt werden. Zur weiteren Aushärtung der Klebstoffschicht kann der zur nachfolgenden Lackierung von Blechen erforderliche Trocknungsofen zusätzlich genutzt werden.

Die zur Reaktivierung des Schmelzklebers erforderliche Wärme kann beispielsweise durch Einsatz von Ultraschall, energiereiche Strahlung, Heizelemente oder durch Reibung zwischen den Trageflächen und der Klebefläche erzeugt werden. Die Reaktivierung des Schmelzklebstoffs erfolgt vorzugsweise durch Erwärmung der Klebefläche, welche nach dem Erweichen oder Erschmelzen an das Trägerteil gehalten und dann angedrückt wird.

Aus der US-A-3 399 435 ist eine zweiteilige Durchführungshülse bekannt, bei der in Aussparungen wärmeaktivierbarer Klebstoff deponiert wird, welcher unter normalen Temperaturen ebenfalls hart und nicht klebend ausgebildet ist und durch Anwendung von Hitze aktivierbar ist. Durch die Aktivierung werden die beiden Hülsenteile nach dem Einsetzen im Durchgangsloch der Trägerplatte M mit dieser fest verklebt, wodurch die Haltekraft auf der Trägerplatte erheblich vergrößert wird. Der hierbei verwendete Klebstoff soll zwar, wie aus Spalte 3, Zeilen 32 - 38 hervorgeht, aus einer Anzahl von Komponenten hergestellt sein, doch werden über Art und Zusammensetzung der Komponenten wie auch über die Aushärtungszeiten keine näheren Angaben gemacht.

Bei Befestigungselementen aus Kunststoff läßt sich der Schmelzklebstoff im Zuge des Spritzgießens auf einfache Weise aufbringen, indem der Schmelzklebstoff nach dem Öffnen des Werkzeugs vor dem Auswerfen der abgespritzten Teile auf die freiliegende Klebefläche aufgetragen und dann durch die Restwärme der noch nicht vollständig abgekühlten Teile schnellgetrocknet wird. Dadurch kann ein weiterer Arbeitsgang zum Auftragen des Schmelzklebstoffs eingespart werden.

Die Klebefläche kann zur Vermeidung von Spannungsspitzen in den Klebschichten in ihrem Randbereich mit einer spitz auslaufenden, dünnen Lippe versehen sein. Aus der FR-A-1 164 793 ist zwar ein Wandhaken mit einer herkömmlichen Klebstoffschicht zur Befestigung an einer Wand bekannt, bei der der Plattenrand zur Klebfläche hin leicht abgeschrägt ist. Diese Abschrägung dient jedoch allen der Vermeidung scharfer Kanten im Sanitärbereich und ist angesichts der relativ starken Neigung offenbar nicht geeignet zur Vermeidung von Spannungsspitzen bei Kippbeanspruchung.

In der Zeichnung sind verschiedene Ausführungsbeispiele der erfindungsgemäßen Befestigungselemente sowie die einzelnen Verarbeitungsschritte bis zum bestimmungsgemäßen Einsatz dargestellt und sollen nachfolgend näher beschrieben werden. Es zeigt
- Fig. 1: vier verschiedene Ausführungsformen von verklebbaren Befestigungselementen nach der Erfindung,
- Fig. 2: ein Befestigungselement beim Eintauchen der Klebefläche in das Schmelzklebstoffbad,
- Fig. 3: das gleiche Befestigungselement beim Trocknen des Schmelzklebstoffs,
- Fig. 4: das Befestigungselement in Aufdrückposition auf einer Trägerplatte beim Aufschmelzen der Klebefläche,
- Fig. 5: ein Befestigungselement beim vollen Eintauchen in das Tauchbad,
- Fig. 6: das allseits mit Klebstoff ummantelte Befestigungselement beim Trocknen,
- Fig. 7: das gleiche Befestigungselement in Aufdrückposition beim Aufschmelzen gemäß Figur 4,
- Fig. 8: das Verkleben eines Befestigungselementes mittels eines Roboters und
- Fig. 9: Befestigungselement mit Klebeplatte mit einer im Randbereich spitz auslaufenden dünnen Lippe

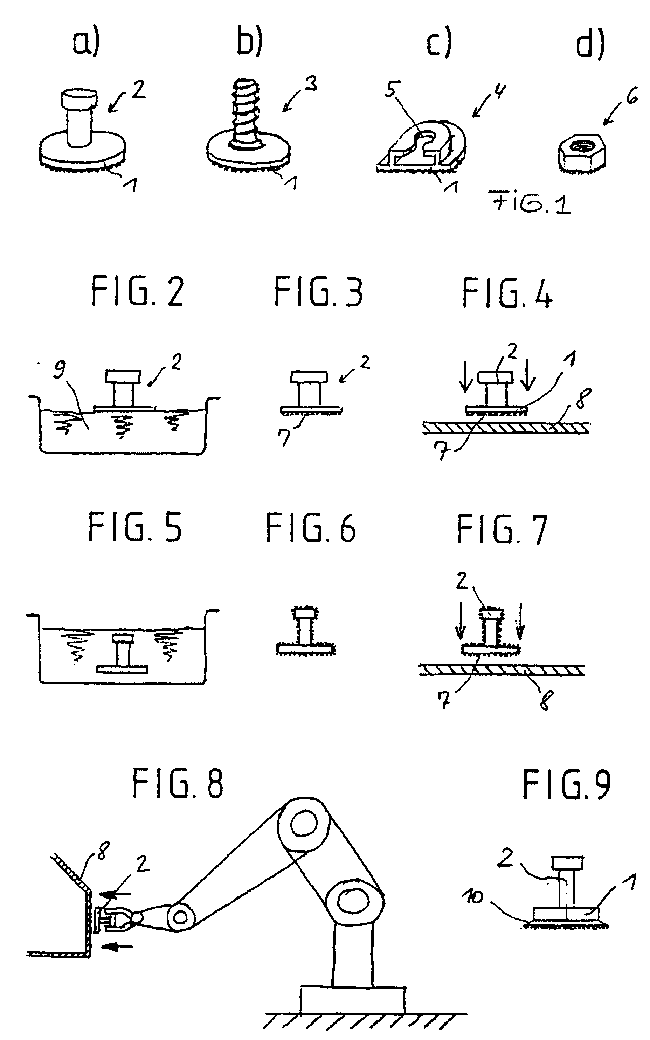

In den Figuren 1 a) bis d) sind vier typische verklebbare Befestigungselemente dargestellt, die im Kraftfahrzeugbau zum Halten von Bau- oder Funktionsteilen verwendet werden. Diese Befestigungselemente sind jeweils mit einer Platte 1 zur Herstellung eines Klebeverbundes mit der Oberfläche eines Trägerteils, beispielsweise eines Karosseriebleches, versehen.

Auf der Platte 1 ist jeweils ein Haltebereich 2, 3, 4 oder 6 zur Herstellung einer formschlüssigen Verbindung mit einem Bau- oder Funktionsteil einstückig angeformt. Hierbei handelt es sich bei dem Haltebereich gemäß Figur 1a) um einen sogenannten Kopfbolzen 2, bei Figur 1b) um einen sogenannten Gewindebolzen 3, bei Figur 1c) um eine Halteplatte 4 mit seitlich offenem Schlüsselloch 5, in das ein von einem anderen Bauteil oder Befestigungsclip abstehender Kopfbolzen einrastbar ist, und bei Fig. 1d) um eine Mutter 6.

Die Platte 1 ist an der zur Herstellung des Klebeverbundes vorgesehenen Unterseite mit einem härt- oder vemetzbaren, einkomponentigen, hochreaktiven Schmelzklebstoff ausgerüstet bzw. beschichtet, welcher auf der Basis von spezifischen Rückgratbindemitteln aufgebaut ist, und welcher die Eigenschaft besitzt, bei Temperaturen bis 80 ° C nicht klebend und verschleißfest zu sein. Dieser Schmelzklebstoff läßt sich jedoch durch Wärmezufuhr wieder reaktivieren, wobei die Wärme auch durch andere Energieformen, wie beispielsweise durch Ultraschall, Heizelemente, Mikrowelle oder Reibung erzeugt werden kann.

Zur Sicherstellung von kurzen Abbinde- und Härtezeiten der Klebstoffschichten auf den Befestigungselementen müssen die Rückgratbindemittel und deren Härtungssysteme eine sehr hohe Reaktivität besitzen. Besonders bevorzugte Rückgratbindemittel sind tri-,tetra- und/oder polyfunktionelle Epoxidharze, die mittels Polyaddition oder Polymerisation erhärten. Die dazu geeigneten Härtersysteme unterscheiden sich dadurch, daß für die Polyaddition Verbindungen mit mindestens 2 aktiven Wasserstoffatomen im Molekül (z.B. aliphatische, cycloaliphatische oder aromatische Amine, Dicyandiamide und dgl.) und für die kationische oder anionische Polymerisation katalytisch wirkende Lewis- bzw. Bömstedt- Säuren und/oder Basen - gegebenenfalls in Gegenwart von Metallkomplexverbindungen - zum Einsatz kommen.

Weitere bevorzugte Rückgratbindemittel wie z.B. ungesättigte Polyesterharze gehören zur Familie der ungesättigten Polymere. Diese Rückgratbindemittel lassen sich entweder freiradikalisch mit temperaturabhängigen Härtungs- und Beschleunigersystemen oder mit UV-Strahlen in Gegenwart von Photoinitiatoren sowie mit Elektronenstrahlen abbinden und härten.

Das Aufbringen des Schmelzklebstoffs kann beispielsweise dadurch erfolgen, daß das Befestigungselement, wie in Figur 2 gezeigt, mit der Klebeplatte 1 auf die Oberfläche eines Schmelzklebstoffbades 9 abgesenkt und wieder angehoben wird. Die an der Unterseite haftende Klebstoffschicht 7 muß dann noch abtrocknen (Figur 3). Danach können die Befestigungselemente verpackt und an den Bestimmungsort transportiert werden, ohne daß Gefahr besteht, daß diese zusammenkleben.

Zur Herstellung der Klebeverbindung mit der Oberfläche eines Trägerteils 8, welches beispielsweise das Karosserieblech eines Kraftfahrzeuges sein kann, wird das Befestigungselement mit der auf 150 - 180°C erhitzten Klebstoffschicht 7 dicht über der Trägerplatte 8 parallel zu dieser gehalten und dann auf die Trägerplatte 8 aufgedrückt, bis der Schmelzklebstoff angehärtet ist. Zur weiteren Aushärtung der Klebstoffschicht kann der zur nachfolgenden Lackierung von Blechen erforderliche Trocknungsofen zusätzlich genutzt werden.

Das Positionieren und Andrücken des Befestigungselementes erfolgt zweckmäßigerweise mit einem Industrieroboter, welcher in Fig.8 schematisch angedeutet ist.

Die Befestigungselemente nach Figur 1 a) - d) können sowohl aus Metall als auch aus Kunststoff hergestellt sein. Bei Ausbildung aus Metall besteht auch die Möglichkeit, die Befestigungselemente, wie in Figur 5 schematisch angedeutet, im Tauchbad mit der Klebstoffschicht 7 zu überziehen. Durch die allseitige Ummantelung des Befestigungselementes (Figur 6) wird dieses gleichzeitig gegen Rost geschützt.

Das Positionieren und Verkleben des Befestigungselementes gemäß Figur 7 erfolgt in der gleichen Weise, wie bei Figur 4 gezeigt. Dabei wird die Klebstoffschicht 7 nur örtlich an der Unterseite der Klebeplatte 1 zum Schmelzen gebracht; die übrige Ummantelung ist hiervon nicht betroffen.

Bei Befestigungselementen aus Kunststoff läßt sich das Aufbringen des Schmelzklebstoffs auch im Spritzgießwerkzeug im Zuge des Spritzgießens durchführen, indem der Schmelzklebstoff nach dem Öffnen des Spritzgießwerkzeuges vor dem Auswerfen der abgespritzten Teile auf die freiliegende Klebefläche aufgetragen und dann schnellgetrocknet wird.

Bei dem Befestigungselement nach Fig. 9 ist der äußere Rand der Klebefläche mit einer dünnen, spitz auslaufenden Lippe 9 versehen. Dadurch wird verhindert, daß sich in den Randzonen der Klebschichten Spannungsspitzen aufbauen, so daß die Haftwirkung des geklebten Befdestigungselementes auch den seitlichen Krafteinwirkungen auf den Bolzenkopf und dem damit verbundenen Schäleffekt hinreichenden Widerstand leistet.

Die Erfindung ist nicht nur auf verklebbare Befestigungsmittel beschränkt, sondern erstreckt sich ganz allgemein auf die Verwendung des vorbeschriebenen Schmelzklebstoffes zur Ausrüstung oder Beschichtung von Bau- oder Funktionsteilen wie beispielsweise Leisten, Profilstäben, Blech- oder Kunststoffplatten und dergleichen zur Herstellung von Klebeverbindungen.

## Patentansprüche

1. Verklebbares Befestigungselement zum Halten von Bau- oder Funktionsteilen auf im wesentlichen ebenen Trägerteilen, bestehend aus einem adhäsiven Funktionsbereich zur Herstellung eines Klebeverbundes mit der Oberfläche des Trägerteils ( 8 ) und mindestens einem weiteren Haltebereich ( 2, 3, 4,und 6 ) zur Herstellung von form- oder kraftschlüssigen Verbindungen mit dem Bauteil, wobei der adhäsive Funktionsbereich eine an die Oberfläche des Trägerteils ( 8 ) plan anlegbare, mit einer Klebstoffschicht versehene Klebefläche ( 1 ) aufweist und die Klebefläche ( 1 ) mit einem härtbaren, reaktiven Schmelzklebstoff ( 7 ) ausgerüstet ist, welcher bei normalen Temperaturen trocken, d.h. verschleißfest und nicht klebend, ausgebildet ist und mittels Wärme- oder sonstiger Energiezufuhr zur Herstellung einer dauerhaften Klebeverbindung reaktivierbar ist, **dadurch gekennzeichnet,** daß der Schmelzklebstoff (7) bei Temperaturen bis 80°C trocken ausgebildet ist und auf der Grundlage von spezifischen Rückgratbindemitteln aufgebaut ist, die nach Polymerisations-, Polyadditions- und/oder Polykondensations-Reaktionsmechanismen abbinden und erhärten.

2. Befestigungselement aus hart- oder zähelastischem Kunststoff nach Anspruch 1, dadurch gekennzeichnet, daß der Schmelzklebstoff ( 7 ) im Zuge des Spritzgießens unmittelbar nach dem Öffnen des Werkzeugs auf die freiliegende Klebefläche ( 1 ) aufgetragen und dann durch die Restwärme der noch nicht ausgekühlten Teile schnellgetrocknet wird.

3. Befestigungselement nach Anspruch 1, dadurch gekennzeichnet, daß die Klebefläche ( 1 ) in ihrem Randbereich mit einer spitz auslaufenden dünnen Lippe (10) versehen ist.

## Claims

1. A glueable fastening element for holding structural or functional parts on substantially flat carrier parts, comprising an adhesive functional region for making an adhesive bond to the surface of the carrier part (8) and at least one further holding region (2, 3, 4 and 6) for making positively locking or force-locking connections to the structural part, wherein the adhesive functional region has an adhesive surface (1) which is provided with a layer of adhesive and which can be applied flat against the surface of the carrier part (8) and the adhesive surface (1) is provided with a hardenable, reactive melt adhesive (7) which is of such a nature as to be dry at normal temperatures, that is to say wear-resistant and non-adhesive, and which can be reactivated by means of heat or another supply of energy to make a durable adhesive join, chacterised in that the melt adhesive (7) is of such a nature as to be dry at temperatures of up to 80°C and is constituted on the basis of specific chain bonding agents which set and harden in accordance with polymerisation, polyaddition and/or polycondensation reaction mechanisms.

2. A fastening element of hard-elastic or ductile-elastic plastics material according to claim 1 characterised in that the melt adhesive (7) is applied to the exposed adhesive surface (1) in the course of the injection moulding operation immediately after opening of the tool and is then quick-dried by the residual heat of the parts which have not yet cooled down.

3. A fastening element according to claim 1 characterised in that in its edge region the adhesive surface (1) is provided with a thin lip (10) terminating in a pointed configuration.

## Revendications

1. Elément de fixation collable pour le maintien d'éléments structuraux ou fonctionnels sur des éléments supports essentiellement plats, se composant d'une partie fonctionnelle adhésive destinée à réaliser une liaison par collage avec la surface de l'élément support (8), et au moins une autre partie de retenue (2, 3, 4 et 6) destinée à réaliser, par l'action mécanique résultant de sa forme et de l'action qu'elle exerce, des liaisons de raccordement avec l'élément de construction, ladite partie fonctionnelle adhésive comprenant en l'occurrence une surface de collage (1) enduite d'une couche de substance adhésive applicable de manière horizontale sur l'élément support et la surface de collage (1) étant munie d'une substance adhésive fusible réactive polymérisable (7) qui, à des températures normales, est sèche, c'est-à-dire résiste à l'usure et ne colle pas et qui peut être réactivée par un apport de chaleur ou par la mise en oeuvre d'une autre source d'énergie pour réaliser une liaison par collage durable, caractérisé en ce que la substance adhésive fusible (7) reste sèche en présence de températures allant jusqu'à 80°C et est réalisée sur la base d'agents de réticulation spécifiques qui polymérisent et durcissent selon des mécanismes de réaction de polymérisation, de polyaddition et/ou de polycondensation.

2. Elément de fixation en matière plastique à cèdage élastique dur selon la revendication 1, caractérisé en ce que la substance adhésive fusible (7) est appliquée, lors du processus d'injection, directement après l'ouverture du moule, sur la surface de collage (1) librement exposée, puis est séchée rapidement sous l'effet de la chaleur résiduelle des pièces injectées non encore refroidies.

3. Elément de fixation selon la revendication 1, caractérisé en ce que la surface de collage (1) est munie, au niveau de son bord, d'une mince lèvre se terminant en pointe.
